(19) Europäisches Patentamt
European Patent Office
Office européen des brevets

(11) EP 2 100 982 A1

(12) EUROPEAN PATENT APPLICATION

(43) Date of publication:
16.09.2009 Bulletin 2009/38

(51) Int Cl.:
C22C 19/05 (2006.01)     C22C 30/00 (2006.01)

(21) Application number: 08003904.3

(22) Date of filing: 03.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: SIEMENS AKTIENGESELLSCHAFT
80333 München (DE)

(72) Inventors:
• Hasselqvist, Magnus
61243 Finspong (SE)
• McColvin, Gordon
LN6 8DP North Hykeham
Lincoln (GB)

(54) **Nickel base gamma prime strengthened superalloy**

(57)     A nickel base gamma prime strengthened superalloy with a unique blend of high hot corrosion resistance, high oxidation resistance, high coating compatibility, good weldability, high phase stability and at least moderate creep resistance is disclosed. The composition comprises: Up to 20 wt% Co, between 17 and 21 wt% Cr, between 2 and 5 wt% of Mo+W+Re, at most 2 wt% Mo, between 4 and 4.7 wt% Al, between 3 and 7 wt% Ta, between 0.01 and 0.3 wt% of C+Zr+B, between 0.05 and 1 wt% Hf, between 0.05 and 1 wt% Si, and between 0.01 and 0.2 wt% of the sum of rare earths such as Sc, Y, the actinides and the lanthanides. The composition is intended for use as base alloy for moderately stressed hot components, especially in gas turbines, and as filler alloy for cladding and weld repair in moderately stressed parts of hot components, especially in gas turbines.

# FIG 2

MOLE-FRACTION OF PHASES

1:T-273.15,NPM(BCC_A2)
2:T-273.15,NPM(FCC_A1)
3:T-273.15,NPM(GAMMA-PRIME)
4:T-273.15,NPM(LIQUID)

TEMPERATURE_CELSIUS

**Description**

The present invention relates to a nickel-base gamma prime strengthened superalloy. It further relates to its use in hot components such as, but not restricted to, vanes, heat shields, sealings and combustor parts in gas turbines. It further relates to its use as filler alloy for cladding and repair of hot components such as, but not restricted to, blades, vanes, heat shields and combustor parts in gas turbines. It further relates to its use in equiaxed, directionally solidified or monocrystalline form.

Gamma prime strengthened nickel-base superalloys are essential for critical components in aero and land based gas turbines, but are used also in other applications. The difference between said superalloys depend on the level of knowledge and production technology available at the time they were developed, and, on different relative emphasis on properties such as hot corrosion resistance, oxidation resistance, coating compatibility, weldability, phase stability and creep strength. Most alloy development has emphasized high creep strength as needed for gas turbine blades which are subject to high loadings from the rotation of the rotor to which they are attached.

Nickel-base gamma prime strengthened superalloys are used in monocrystalline (SX), directionally solidified (DS) or equiaxed form. In each crystal there is a matrix of the phase gamma which is essentially Ni with elements like Co, Cr, Mo, W and Re in solid solution, and, particles of the phase gamma prime which is essentially $Ni_3Al$ with elements like Ti, Ta and Nb in solid solution. Grain boundaries, if present, are usually decorated by carbides and/or borides which provide cohesive strength. Zr also contributes to grain boundary cohesion.

Creep strength is provided by elements like Mo, W and Re which provide solution strengthening of the gamma matrix, and, Ti, Ta and Nb which provide solution strengthening of the gamma prime particles. Ta has a particularly high strengthening effect per at%. Al provides creep strength as it increases the amount of gamma prime particles, and as it concentrates the levels of Mo, W and Re in the matrix.

If the concentration of Cr, Mo, W and Re in the matrix is too high, so called topologically close packed (TCP) phases will form in service. Therefore, an increased gamma prime content, or, increased Mo, W or Re levels, must be accompanied by a reduction in Cr if TCP formation is to be avoided. One particular effect of TCP precipitation is a reduction in creep strength.

[Caron 1] teaches that the risk for TCP precipitation for an alloy can be estimated through comparison of the Md value for this alloy and a relatively similar alloy with known TCP risks. For the alloys analyzed here, the Md value can be calculated from

```
Md =
0.717aNi+0.787aCo+1.142aCr+1.55aMo+1.655aW+1.9aAl+2.271a
Ti+2.224aTa
```

wherein aCo is the content of Co in atom% etc.

Hot corrosion resistance is provided by Cr. It is also important to allow at most moderate Mo levels.

[Goldschmidt] teaches that the hot corrosion resistance of the alloy SC16 with 16 wt% Cr and 3 wt% Mo is significantly inferior to that of IN738LC with 16 wt% Cr and 1.8 wt% Mo. IN738LC is generally recognized as having high hot corrosion resistance. Therefore a restriction to at most 2 wt% Mo in a new alloy seems prudent.

In the context of high firing temperature gas turbines it is generally accepted that high oxidation resistance require the ability to form an adherent continuous $AL_2O_3$ scale, as needed for metal temperatures on the 1000 degree Celcius level.

[Barrett] teaches that this ability is provided by Al, enhanced by Cr and Ta, somewhat reduced by Mo and W, and significantly reduced by Ti and Nb. This implies that less Al is needed to form such an $Al_2O_3$ scale if the levels of Cr and Ta are increased, or, the levels of Ti and Nb are reduced.

[Sarioglu] teaches that the scale adherence is severely reduced by tramp elements such as S, but, that this effect can be neutralized by a combination of clean casting and addition of small measured levels of reactive elements (RE).

[Pint 1] underlines the importance of S, and further teaches the beneficial RE effects when small levels of Hf and the rare earth Y are combined.

[Caron 2] teaches the beneficial RE effects when small levels of Hf and Si are combined.

[Pint 2] teaches that optimal RE effects can be obtained when multiple RE are used, one example being the excellent cyclic oxidation resistance seen in tests on Haynes-214 which contained small levels of Zr, Si and Y.

One important aspect of coating compatibility particularly relevant for modern high firing temperature gas turbines is the cyclic life of an applied thermal barrier coating.

[Wahl&Harris] teaches that the spallation life of a TBC increased significantly when rare earths were added to the base alloy.

[Wu] teaches that the spallation life of a TBC can be correlated to the oxidation resistance of the base alloys. In particular, the lowest spallation life was obtained for the base alloy with the highest Ti content.

It is generally accepted that the risk for weld cracking during solidification, or, subsequent heat treatment, increases with increasing gamma prime content of the base and filler alloys.

The used references can be found as follows:

[Caron 1] P.Caron High Gamma Prime Solvus New Generation Nickel-Based Superalloys for Single Crystal Turbine Blade Applications Proceedings 'Superalloys 2000'

[Goldschmidt] D.Goldschmidt Single-Crystal Blades Proc. from Materials for Advanced Power Engineering 1994, Part I, p.661-674

[Barrett] C.A.Barrett A Statistical Analysis of Elevated Temperature Gravimetric Cyclic Oxida¬tion Data of 36 Ni- and Co- base Superalloys based on an Oxidation Attack Parameter NASA TM 105934

[Sarioglu] C.Sarioglu, et al. The Control of Sulfur Content in Nickel-Base Single Crystal Superalloys and its Effect on Cyclic Oxidation Resistance Proceedings 'Superalloys 1996'

[Pint 1] B.A.Pint et al Effect of Cycle Frequency on High-Temperature Oxidation Behavior of Alumina- and Chromia- Forming Alloys Oxidation of Metals, 58 (1/2), 73-101 (2002)

[Caron 2] P.Caron et al. Improvement of the Cyclic Oxidation Behaviour of Uncoated Nickel Based Single Crystal Superalloys Materials Proceedings 'Materials for Advanced Power Engineering 1994'

[Pint 2] B.A.Pint et al. The use of Two Reactive Elements to Optimize Oxidation Performance of Alumina-Forming Alloys Materials at High Temperature 20(3) 375-386, 2003

[Wahl&Harris] J.B.Wahl, K.Harris Advances in Single Crystal Superalloys - Control of Critical Elements Proceedings '7th Parsons conference', 2007

[Wu] R.Wu et al On the Compatibility of Nickel-Based Single Crystal Superalloys with Coating Systems Proceedings '7th Parsons conference', 2007

[Caron 3] P.Caron et al Development of New High Strength Corrosion Resistant Single Crystal Superalloys for Industrial gas Turbine Applications Proceedings '5th Parsons confer¬ence', 2000

Early alloy development resulted in alloys such as U-700 which has a composition, in wt%, given by Ni-17Co-15Cr-4.5Mo-4.3A1-3.5Ti-0.07Zr-0.08C. U-700 can form a continuous Al2O3 scale with 4.3 wt% Al thanks to 15 wt% Cr and despite 3.5 wt% Ti. These alloys have less hot corrosion resistance than suggested by their Cr levels due to their high levels of Mo, the main strengthening element in use at the time they were developed. Their gamma prime contents are in the 45 to 55 vol% range implying that they do not provide good weldability. They have a tendency to precipitate TCP, and typically provide moderate creep strength.

One line of subsequent alloy development led to alloys such as the commercially available alloys IN939, IN738LC and IN792, and this class of alloys remains the norm in land based gas turbines to this day. IN939, an alloy typically used for vanes, has a composition, in wt%, given by Ni-19Co-22Cr-2W-2Al-3.7Ti-1.4Ta-1Nb-0.1Zr-0.15C-0.01B. That of IN738LC is Ni-8.5Co-16Cr-1.8Mo-2.6W-3.4Al-3.4Ti-1.8Ta-0.9Nb-0.09Zr-0.08C-0.01B. That of IN792 is Ni-9Co-12.5Cr-1.8Mo-4.2W-3.4Al-4.2Ti-4.2Ta-0.08C-0.015B.

Compared to alloys such as U-700, Mo is partly replaced by W for improved hot corrosion resistance, and, Al is partly replaced by Ti, Nb and Ta for improved creep strength through increased solution strengthening of the gamma prime. In particular, these alloys contain high Ti levels.

Their hot corrosion resistance range from very high in alloys like IN939 to moderate in IN792 depending on their Cr contents. These alloy do not have the capability to form a continuous Al2O3 scale, thus they do not provide high oxidation resistance. Their coating compatibility is at best moderate due to their high Ti levels. The gamma prime particle contents are typically in the 30-55 vol% range, and alloys like IN939 at the lower end of this interval have good weldability by the standards of blade and vane alloys. Improved knowledge allowed alloy designers to handle phase stability better than for the old alloys above. The creep strength varies from moderate in alloys like IN939 to high in alloys like IN792.

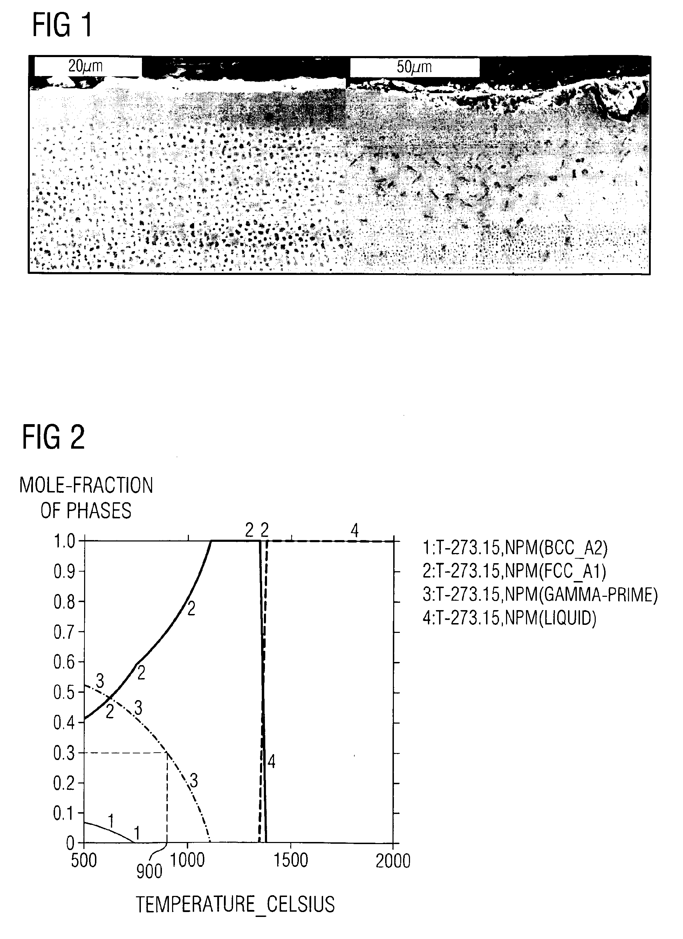

Derivatives such as SCA425 and SCA425Hf with reduced Ti and increased Al and Ta levels have recently been developed, see [Caron 3]. SCA425 has a composition, in wt%, given by Ni-5Co-16Cr-1Mo-4W-4Al-2Ti-5Ta, and SCA425Hf also includes 0.4Hf for RE effect and coating compatibility. In-house oxidation tests on SCA425 showed that it is almost, but not quite, capable of forming a continuous Al2O3 scale, see figure 1. The creep strength of SCA425 is high. The reduced Ti levels imply improved coating compatibility relative to alloys such as IN738LC. The gamma prime contents are in the 45 to 55 vol% range implying that they do not provide good weldability.

Another line of subsequent alloy development led to alloys such as Mar M-247 which has a composition, in wt%, given by Ni-10Co-8Cr-0.7Mo-10W-5.65Al-1Ti-3Ta-1.5Hf-0.15C. The introduction of DS and SX casting led to derivative alloys such as CM247DS and Rene N5. In Rene N5, some W has been replaced by Re, and Hf has been replaced by Ta. The composition in wt% is Ni-7.5Co-7Cr-1.5Mo-5W-3Re-6.1Al-6.5Ta-0.1Hf-0.05C.

The hot corrosion resistance in this class of alloys is poor due to their very low Cr levels. Their high Al levels supported by moderate to high Ta levels, allow them to form continuous Al2O3 scales despite their very low Cr levels. Their coating compatibility is high thanks to low Ti levels. Recently, significant work has been done to enhance their oxidation resistance and coating compatibility via clean casting and use of RE effects. Their weldability is poor due to their very high gamma prime contents in the 60 to 75 vol% range. Care has been taken to achieve phase stability to avoid reduction of creep strength due to TCP precipitation. Their creep strengths range from high in alloys such as Mar M-247 to very high in alloys such as Rene N5.

Outside these three main classes, there are some specialized alloys of interest. Haynes-214 has a basic composition in wt% given by Ni-3Fe-16Cr-4.5Al and also contains small levels of Zr, Si and Y to provide RE effects. It combines high hot corrosion resistance, excellent oxidation resistance and high weldability. The creep strength is poor because it contains no strengthening elements.

None of the alloys above provide a blend of high hot corrosion resistance, high oxidation resistance, high coating compatibility, good weldability, high phase stability and at least moderate creep resistance, and it is an objective of this invention to provide such a blend.

This blend of properties will be useful for design of moderately stressed gas turbine components such as vanes and heat shields, and, for a filler used for cladding and weld-repair of moderately stressed parts of gas turbine components such as blade tips and platforms. Further, this blend of properties will be useful in components protected by thermal barrier coatings.

Consider a component and a hot spot on said component. A base alloy with this blend of properties would provide a higher cyclic life for an applied thermal barrier coating than an Ti rich alloy such as IN939, and, would provide a longer residual life if spallation occurs.

Consider further a component cast in a Ti rich alloy such as IN939 and protected by a thermal barrier coating, and that said component has suffered local spallation of this thermal barrier coating at a hot spot, leading to oxidation damage. Weld-repair with a filler alloy having the said blend of properties would result in locally improved resistance to spallation of the thermal barrier coating when re-applied after weld-repair, and, increased residual life if spallation occurs.

Base and filler alloys with this blend of properties will also provide better robustness in corrosive environments than high Mo content alloys such as U-700, or low Cr content alloys such as Mar M-247. Further, they will provide better dimensional stability than a weak alloy such as Haynes-214.

Consider further that in a weld, mixing during welding and subsequent interdiffusion in service will occur. In particular, Ti may diffuse into the filler alloy in the case of Ti rich base alloys such as IN939. It would be an advantage to have a filler alloy which retained adequate phase stability also while having absorbed some Ti, to avoid TCP precipitation. TCP phases are, after all, also known as brittle phases.

In the present invention, the requirements on high hot corrosion resistance, high oxidation resistance, high coating compatibility, good weldability, high phase stability and at least moderate creep resistance are met through the use of moderate levels of Al and Ta, high levels of Cr, multiple reactive elements, moderate levels of matrix strengthening elements like Mo, W and Re, a particular restriction on the level of Mo, and by avoiding detrimental gamma prime strengthening elements like Ti and Nb.

The idea is that moderate levels of Al and Ta are sufficient to enable formation of an adherent continuous AL2O3 scale thanks to support from high levels of Cr, multiple RE effects and that we avoid detrimental elements like Ti and Nb. Therefore, the gamma prime content is kept sufficiently low to allow for good weldability. Further, moderate levels of matrix and gamma prime strengthening elements enable moderate creep strength. Further, high levels of Cr and a strict limit on Mo enable high hot corrosion resistance. Further, high levels of Cr can be tolerated from a phase stability point of view because the gamma prime content and the amount of matrix strengthening elements are moderate. Further, high coating compatibility is enabled by avoiding detrimental elements like Ti and Nb, and, by a combination of clean casting and the use of RE to neutralize any remaining S.

According to one embodiment of the invention the alloy may include, measured in wt%, up to 20 wt% Co, between 17 and 21 wt% Cr, between 2 and 5 wt% of Mo+W+Re, at most 2 wt% Mo, between 4 and 4.7 wt% Al, between 3 and 7 wt% Ta, between 0.01 and 0.3 wt% of C+Zr+B, between 0.05 and 1 wt% Hf, between 0.05 and 1 wt% Si, and between 0.01 and 0.2 wt% of the sum of rare earths such as Sc, Y, the actinides and the lanthanides.

Additionally, the alloy may include, measured in wt%, between 2 and 12 wt% Co, between 17 and 21 wt% Cr, up to 1 wt% Mo, between 1 and 4 wt% W, between 4 and 4.7 wt% Al, between 3 and 7 wt% Ta, between 0.01 and 0.1 wt% C, between 0.01 and 0.15 wt% Zr, between 0.002 and 0.02 wt% B, between 0.05 and 1 wt% Hf, between 0.05 and 1 wt% Si, and between 0.01 and 0.2 wt% of Ce+La+Y+Dy.

Additionally, the alloy may include between 3 and 7 wt% Co, between 17 and 19 wt% Cr, between 0.5 and 1 wt% Mo, between 2 and 3 wt% W, between 4.2 and 4.6 wt% Al, between 3.5 and 5 wt% Ta, between 0.01 and 0.07 wt% C, between 0.01 and 0.1 wt% Zr, between 0.002 and 0.01 wt% B, between 0.05 and 0.5 wt% Hf, between 0.05 and 0.5 wt% Si, and between 0.01 and 0.1 wt% of the sum of Ce+La+Y+Dy.

Additionally, the alloy may include between 4.5 and 5.5 wt% Co, between 17.7 and 18.3 wt% Cr, between 0.7 and 0.9 wt% Mo, between 2.3 and 2.7 wt% W, between 4.3 and 4.5 wt% Al, between 4.2 and 4.6 wt% Ta, between 0.02 and 0.04 wt% C, between 0.02 and 0.05 wt% Zr, between 0.002 and 0.008 wt% B, between 0.07 and 0.13 wt% Hf, between 0.07 and 0.13 wt% Si, and between 0.01 and 0.03 wt% of the sum of Ce+La+Y+Dy.

In a preferred embodiment called STAL18, the alloy may include about 5 wt% Co, about 18 wt% Cr, about 0.8 wt% Mo, about 2.5 wt% W, about 4.4 wt% Al, about 4.4 wt% Ta, about 0.03 wt% C, about 0.03 wt% Zr, about 0.005 wt% B, about 0.1 wt% Hf, about 0.1 wt% Si, and about 0.02 wt% Ce.

Alternatively, the alloy can include between 3 and 7 wt% Co, between 19 and 21 wt% Cr, between 2 and 4 wt% W, between 4.3 and 4.7 wt% Al, between 4 and 7 wt% Ta, between 0.01 and 0.07 wt% C, between 0.01 and 0.1 wt% Zr, between 0.002 and 0.01 wt% B, between 0.05 and 0.5 wt% Hf, between 0.05 and 0.5 wt% Si, and between 0.01 and 0.1 wt% of the sum of Ce+La+Y+Dy.

Additionally, the alloy may include between 4.5 and 5.5 wt% Co, between 19.7 and 20.3 wt% Cr, between 2.7 and 3.3 wt% W, between 4.4 and 4.6 wt% Al, between 5.3 and 5.7 wt% Ta, between 0.02 and 0.04 wt% C, between 0.02 and 0.05 wt% Zr, between 0.002 and 0.008 wt% B, between 0.07 and 0.13 wt% Hf, between 0.07 and 0.13 wt% Si, and between 0.01 and 0.03 wt% of the sum of Ce+La+Y+Dy.

In a preferred embodiment called STAL20, the alloy may include about 5 wt% Co, about 20 wt% Cr, about 3 wt% W, about 4.5 wt% Al, about 5.5 wt% Ta, about 0.03 wt% C, about 0.03 wt% Zr, about 0.005 wt% B, about 0.1 wt% Hf, about 0.1 wt% Si, and about 0.02 wt% Ce.

The superalloy according to the invention is preferably processed with a clean production process. To guarantee best results, the superalloy should contain less than 2 ppmw S. Alternatively, further embodiments can be designed to optimize compatibility with specific coatings when the alloy is used as a base alloy. Alternatively, further embodiments can be designed to optimize compatibility with specific base alloys and coatings when the alloy is used as filler alloy for cladding and weld repair. Re may for example be included for compatibility with Re containing base alloys, and Co levels can be matched.

For the widest embodiment, the lower bound on Cr and the highest allowable level of Mo, i.e. the worst possible combination, is most likely to provide high hot corrosion resistance.

Further, the ability to form an adherent continuous AL203 scale is best illustrated by comparison with the alloy SCA425Hf which was able to form a continuous Al2O3 scale on most of the surface, but, failed to do so in some spots, after 600h at 1000 degree Celcius as seen in Figure 1. Its Al content is on the lower bound of the embodiment above, its Cr content is lower than the lower bound of the embodiment, its level of mildly detrimental Mo+W is on the upper bound of the embodiment, and it contains 2 wt% of detrimental Ti. The borderline behaviour of SCA425Hf therefore strongly suggests that the worst possible composition in the embodiment is able to form a continuous AL2O3 scale. Then, the combination of clean casting and multiple RE effects will provide scale adherence to this continuous Al2O3 scale.

Further, high coating compatibility is provided by having no Ti or Nb, and by clean casting and the use of RE to neutralize S.

The conclusions above are applicable to any preferred embodiment.

The ThermoCalc simulation of the composition Ni-5Co-18Cr-0.8Mo-2.5W-4.4A1-4.4Ta predict a gamma prime content of 30 % at an equilibrium temperature of 900 degree Celcius for the embodiment called STAL18, see figure 2. This is low enough to suggest good weldability, but not so low as to suggest poor creep strength.

The calculated Md values based on the Caron formula were 0.9477 and 0.9657 for Ni-5Co-18Cr-0.8Mo-2.5W-4.4Al-4.4Ta and Ni-5Co-18Cr-0.8Mo-2.5W-4.4Al-1Ti-4.4Ta respectively, which can be compared with an Md value of 0.9771 for STAL425, an alloy which is known to be adequately stable w.r.t. TCP precipitation. This means that 1 wt% Ti can be absorbed due to mixing or interdiffusion during welding or in service without risk for TCP precipitation when this alloy is used as filler alloy for welding of Ti rich base alloys like IN939. The implication is that the risk for poor fatigue properties in the interdiffusion zone due to TCP precipitation is significantly reduced. After all, TCP phases are also known as brittle phases.

The large heat treatment window seen in the ThermoCalc simulation also suggests that it will respond with full solutioning without incipient melting for the solutioning and HIP procedures associated with most base alloys when it is used as filler alloy for welding.

The level of matrix strengthening elements is higher than for IN939. The high strengthening effect of Ta implies at least moderate solution strengthening of the gamma prime particles despite the fact that the amount of strengthening elements in at% is relatively small. The Ta/Al ratio is e.g. similar to the ratio in Rene N5, another alloy in which Ti and Nb are avoided. Together with a gamma prime content of 30 % this strongly suggests at least moderate creep strength for the embodiment above.

The embodiment called STAL20 will have higher hot corrosion resistance and creep strength than STAL18 thanks to higher Cr and Ta levels. The calculated Md value is 0.9621 which indicates good phase stability based on comparison with SCA425. Unlike STAL18 it will not have a large margin w.r.t. TCP precipitation against absorbation of Ti and is therefore less useful as filler alloy for Ti rich base alloys.

Figure 1    (left) shows the continuous Al2O3 scale formed on most of the surface of SCA425Hf after 600h at 1000 degree Celcius. Figure 1 (right) shows a thick depletion zone and internal nitrides forming below small isolated surface areas. These tell us that the Al2O3 scale has allowed leakage through the scale, i.e. that it is not continuous in these areas.

Figure 2    (right) shows the ThermoCalc simulation on the basic composition of the preferred embodiment STAL18.

## Claims

1.  A nickel base gamma prime strengthened superalloy comprising: Up to 20 wt% Co, between 17 and 21 wt% Cr, between 2 and 5 wt% of Mo+W+Re, at most 2 wt% Mo, between 4 and 4.7 wt% Al, between 3 and 7 wt% Ta, between 0.01 and 0.3 wt% of C+Zr+B, between 0.05 and 1 wt% Hf, between 0.05 and 1 wt% Si, and between 0.01 and 0.2 wt% of the sum of rare earths.

2.  A nickel base gamma prime strengthened superalloy according to claim 1, wherein the rare earth are at least one of the elements Sc, Y, actinides or lanthanides

3.  A nickel base gamma prime strengthened superalloy according to claim 1 or 2 comprising: Between 2 and 12 wt% Co, between 17 and 21 wt% Cr, up to 1 wt% Mo, between 1 and 4 wt% W, between 4 and 4.7 wt% Al, between 3 and 7 wt% Ta, between 0.01 and 0.1 wt% of C, between 0.01 and 0.15 wt% Zr, between 0.002 and 0.02 wt% B, between 0.05 and 1 wt% Hf, between 0.05 and 1 wt% Si, and between 0.01 and 0.2 wt% of Ce+La+Y+Dy.

4.  A nickel base gamma prime strengthened superalloy according to claim 3 comprising: Between 3 and 7 wt% Co, between 17 and 19 wt% Cr, between 0.5 and 1 wt% Mo, between 2 and 3 wt% W, between 4.2 and 4.6 wt% Al, between 3.5 and 5 wt% Ta, between 0.01 and 0.07 wt% C, between 0.01 and 0.1 wt% Zr, between 0.002 and 0.01 wt% B, between 0.05 and 0.5 wt% Hf, between 0.05 and 0.5 wt% Si, and between 0.01 and 0.1 wt% of the sum of Ce+La+Y+Dy.

5.  A nickel base gamma prime strengthened superalloy according to claim 4 comprising: between 4.5 and 5.5 wt% Co, between 17.7 and 18.3 wt% Cr, between 0.7 and 0.9 wt% Mo, between 2.3 and 2.7 wt% W, between 4.3 and 4.5 wt% Al, between 4.2 and 4.6 wt% Ta, between 0.02 and 0.04 wt% C, between 0.02 and 0.05 wt% Zr, between 0.002 and 0.008 wt% B, between 0.07 and 0.13 wt% Hf, between 0.07 and 0.13 wt% Si, and between 0.01 and 0.03 wt% of the sum of Ce+La+Y+Dy.

6.  A nickel base gamma prime strengthened superalloy according to claim 5 comprising: About 5 wt% Co, about 18 wt% Cr, about 0.8 wt% Mo, about 2.5 wt% W, about 4.4 wt% Al, about 4.4 wt% Ta, about 0.03 wt% C, about 0.03 wt% Zr, about 0.005 wt% B, about 0.1 wt% Hf, about 0.1 wt% Si, and about 0.02 wt% Ce.

7.  A nickel base gamma prime strengthened superalloy according to claim 3 comprising: Between 3 and 7 wt% Co, between 19 and 21 wt% Cr, between 2 and 4 wt% W, between 4.3 and 4.7 wt% Al, between 4 and 7 wt% Ta, between 0.01 and 0.07 wt% C, between 0.01 and 0.1 wt% Zr, between 0.002 and 0.01 wt% B, between 0.05 and 0.5 wt% Hf, between 0.05 and 0.5 wt% Si, and between 0.01 and 0.1 wt% of the sum of Ce+La+Y+Dy.

8.  A nickel base gamma prime strengthened superalloy according to claim 7 comprising: Between 4.5 and 5.5 wt% Co, between 19.7 and 20.3 wt% Cr, between 2.7 and 3.3 wt% W, between 4.4 and 4.6 wt% Al, between 5.3 and 5.7 wt% Ta, between 0.02 and 0.04 wt% C, between 0.02 and 0.05 wt% Zr, between 0.002 and 0.008 wt% B, between 0.07 and 0.13 wt% Hf, between 0.07 and 0.13 wt% Si, and between 0.01 and 0.03 wt% of the sum of Ce+La+Y+Dy.

9.  A nickel base gamma prime strengthened superalloy according to claim 8 comprising: About 5 wt% Co, about 20 wt% Cr, about 3 wt% W, about 4.5 wt% Al, about 5.5 wt% Ta, about 0.03 wt% C, about 0.03 wt% Zr, about 0.005 wt% B, about 0.1 wt% Hf, about 0.1 wt% Si, and about 0.02 wt% Ce.

10. A nickel base gamma prime strengthened superalloy according to at least one of the claims 1 to 9, processed with a clean production process resulting in less than 2 ppmw S.

11. Use of a base gamma prime strengthened superalloy according to at least one of the claims 1 to 10 as a hot component of a machine.

12. Use according to claim 11 wherein the hot component is a gas turbine component such as a vane, a heat shield, a sealing or a combustor part.

13. Use of a base gamma prime strengthened superalloy according to at least one of the claims 1 to 10 as a filler alloy for cladding or repair welding in moderately stressed areas of hot components.

14. Use according to claim 13, wherein the hot component is a gas turbine component.

15. Use according to claim 14, wherein the hot component is a blade, a vane, a heat shield, a sealing or a combustor part of a gas turbine.

16. The nickel base gamma prime strengthened superalloy according to at least one of the claims 1 to 10 in monocrystalline form.

17. The nickel base gamma prime strengthened superalloy according to at least one of the claims 1 to 10 in directionally solidified form.

18. The nickel base gamma prime strengthened superalloy according to to at least one of the claims 1 to 10 in equiaxed form.

# FIG 1

# FIG 2

MOLE-FRACTION
OF PHASES

1:T-273.15,NPM(BCC_A2)
2:T-273.15,NPM(FCC_A1)
3:T-273.15,NPM(GAMMA-PRIME)
4:T-273.15,NPM(LIQUID)

TEMPERATURE_CELSIUS

Europäisches
Patentamt
European
Patent Office
Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 240 491 A (BUDINGER DAVID E [US] ET AL) 31 August 1993 (1993-08-31) * the whole document * ----- | 1-18 | INV. C22C19/05 C22C30/00 |
| A | US 5 780 116 A (SILEO GERARD A [US] ET AL) 14 July 1998 (1998-07-14) * the whole document * * column 10, line 20 - line 30 * ----- | 1-18 | |
| A | US 4 668 312 A (BENN RAYMOND C [US] ET AL) 26 May 1987 (1987-05-26) * the whole document * * abstract; claim 1 * ----- | 1-18 | |
| A | US 4 589 937 A (JACKSON MELVIN R [US] ET AL) 20 May 1986 (1986-05-20) * the whole document * Table IV, alloys V4-V6 ----- | 1-18 | |
| A | US 6 546 713 B1 (HIDAKA KISHIO [JP] ET AL) 15 April 2003 (2003-04-15) * the whole document * Table 16, turbine blade alloy ----- | 1-18 | TECHNICAL FIELDS SEARCHED (IPC) C22C |

The present search report has been drawn up for all claims

| Place of search | Date of completion of the search | Examiner |
|---|---|---|
| Munich | 1 July 2009 | von Zitzewitz, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 00 3904

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2009

| Patent document cited in search report | | Publication date | Patent family member(s) | | Publication date |
|---|---|---|---|---|---|
| US 5240491 | A | 31-08-1993 | NONE | | |
| US 5780116 | A | 14-07-1998 | NONE | | |
| US 4668312 | A | 26-05-1987 | CA | 1253719 A1 | 09-05-1989 |
| | | | DE | 3662209 D1 | 06-04-1989 |
| | | | EP | 0197347 A1 | 15-10-1986 |
| | | | JP | 61264145 A | 22-11-1986 |
| US 4589937 | A | 20-05-1986 | NONE | | |
| US 6546713 | B1 | 15-04-2003 | EP | 1041261 A1 | 04-10-2000 |
| | | | WO | 9931365 A1 | 24-06-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P.Caron.** High Gamma Prime Solvus New Generation Nickel-Based Superalloys for Single Crystal Turbine Blade. *Applications Proceedings 'Superalloys 2000'*
- **D.Goldschmidt.** Single-Crystal Blades Proc. from Materials. *Advanced Power Engineering,* 1994, vol. I, 661-674
- **C.A.Barrett.** A Statistical Analysis of Elevated Temperature Gravimetric Cyclic Oxida¬tion Data of 36 Ni. *Co- base Superalloys based on an Oxidation Attack Parameter NASA TM 105934*
- **C.Sarioglu et al.** The Control of Sulfur Content in Nickel-Base Single Crystal Superalloys. *Effect on Cyclic Oxidation Resistance Proceedings 'Superalloys 1996'*
- **B.A.Pint et al.** *Effect of Cycle Frequency on High-Temperature Oxidation Behavior of Alumina- and Chromia-Forming Alloys Oxidation of Metals,* 2002, vol. 58 (1/2), 73-101

- **P.Caron et al.** Improvement of the Cyclic Oxidation Behaviour of Uncoated Nickel Based Single Crystal Superalloys Materials Proceedings. *Materials for Advanced Power Engineering,* 1994
- **B.A.Pint et al.** The use of Two Reactive Elements to Optimize Oxidation Performance of Alumina-Forming Alloys. *Materials at High Temperature,* 2003, vol. 20 (3), 375-386
- **J.B.Wahl ; K.Harris.** Advances in Single Crystal Superalloys. *Control of Critical Elements Proceedings '7th Parsons conference,* 2007
- **R.Wu et al.** *Compatibility of Nickel-Based Single Crystal Superalloys with Coating Systems Proceedings '7th Parsons conference,* 2007
- **P.Caron et al.** *Development of New High Strength Corrosion Resistant Single Crystal Superalloys for Industrial gas Turbine Applications Proceedings '5th Parsons confer¬ence,* 2000